Europäisches Patentamt

European Patent Office

Office européen des brevets

(19)

(11) Veröffentlichungsnummer: **0 311 894 B1**

(12) **EUROPÄISCHE PATENTSCHRIFT**

(45) Veröffentlichungstag der Patentschrift: **15.11.95**

(51) Int. Cl.[6]: **C08L 63/00**, C08G 59/02

(21) Anmeldenummer: **88116527.8**

(22) Anmeldetag: **06.10.88**

Die Akte enthält technische Angaben, die nach dem Eingang der Anmeldung eingereicht wurden und die nicht in dieser Patentschrift enthalten sind.

(54) **Wässrige Dispersionen, Verfahren zu deren Herstellung und ihre Verwendung.**

(30) Priorität: **14.10.87 DE 3734693**

(43) Veröffentlichungstag der Anmeldung:
**19.04.89 Patentblatt 89/16**

(45) Bekanntmachung des Hinweises auf die
Patenterteilung:
**15.11.95 Patentblatt 95/46**

(84) Benannte Vertragsstaaten:
**AT BE CH DE FR GB IT LI NL**

(56) Entgegenhaltungen:
**DE-A- 1 495 843**
**DE-A- 2 943 128**
**US-A- 4 487 797**

(73) Patentinhaber: **BAYER AG**

**D-51368 Leverkusen (DE)**

(72) Erfinder: **Haas, Peter, Dr.**
**Zwengenberger Strasse 43**
**D-5657 Haan 1 (DE)**
Erfinder: **Münstedt, Rainer, Dr.**
**Roggendorfstrasse 59**
**D-5000 Köln 80 (DE)**
Erfinder: **Franke, Joachim, Dr.**
**An der Ruthen 2**
**D-5000 Köln 80 (DE)**

## Beschreibung

Die vorliegende Erfindung betrifft wäßrige Dispersionen, ein Verfahren zu deren Herstellung und ihre Verwendung als Filmbildner in Schlichtemitteln sowie zur Herstellung von geschlichteten Glasfasern und mit diesen verstärkten Kunststoffen.

Es ist bekannt, daß die grundsätzlichen Schwierigkeiten beim Einbau bzw. bei der Verbindung von Glasfasern mit organischen polymeren Materialien einmal darauf zurückzuführen sind, daß die Glasfasern vollständig glatte, strangähnliche Elemente sind. Eine weitere Schwierigkeit besteht darin, daß die Oberfläche der Glasfasern hydrophil ist, was zur Bildung eines dünnen, durch Hydratation fest gebundenen Wasserfilms auf den Glasoberflächen führt. Das Wasser ist in der Lage jede Bindung, ob chemisch oder physikalisch, zu verhindern, die sich sonst zwischen den Glasfaseroberflächen und dem organischen polymeren Material, mit dem die Glasfasern kombiniert werden sollen, bilden können (K.L. Löwenstein, The Manufacturing Technology of Continuous Glass Fibers, Elsevier Scientific Publishing Corp. Amsterdam, London, New York (1983), S. 13).

Um die Schwierigkeiten und Probleme bei dem Verbinden von Glasfasern mit organischen polymeren Materialien, wie oben beschrieben, weitgehend zu beheben, und eine sichere Bindung zwischen den Glasfasern und organischen polymeren Materialien herbeizuführen, werden die Glasfasern geschlichtet, bevorzugt bei ihrer Formgebung während des Faserziehprozesses, und zwar mit einer mit dem zu verstärkenden Polymer kompatiblen und die Haftungseigenschaften der Glasfaser verbessernden Schlichte, und dann zu Strängen, Garnen, Rovings oder Geweben verarbeitet (K.L. Löwenstein, l.c., S. 258).

Neben der grundsätzlichen Aufgabe der Schlichten - Schaffung eines Verbundes zwischen Glasfaser und Kunststoff-Matrix - hat das wäßrige Schlichtemittel zum Ziel, die Verarbeitbarkeit der Glasfasern in allen Verarbeitungsstufen der Praxis sicherzustellen, d.h. Schutz der Filamente, Fäden und Stränge gegenüber jeglicher Art von Reibungsvorgängen und mechanischer Faserbeanspruchung durch Schmierung, Umhüllung und Zusammenhalt der Filamente, Fäden und Stränge (K.L. Löwenstein, l.c., S. 243).

Die Schlichte ist im allgemeinen eine wäßrige Lösung oder Dispersion und besteht in der Regel aus den Bestandteilen:

1. Filmbildner oder Klebemittel oder Bindemittel
2. Gleitmittel oder Schmiermittel
3. Haftvermittler
4. Hilfsstoffe, z.B. Emulgatoren, Antistatika
5. Wasser als Träger.

Der Filmbildner bzw. das Klebemittel hat die Aufgabe, einen Film auf der Glasoberfläche zu bilden, der die Glasfaser-Filamente, Fäden und Stränge durch Umhüllung und gegenseitiges Verkleben gegen mechanische Beanspruchung schützt, d.h. als wesentlicher Schlichtebestandteil die Verarbeitbarkeit herbeiführt, und die Kompatibilität zwischen der Faser und dem organischen Polymer verbessert. Für die Verträglichkeit des Polymeren mit der Glasfaser und für die mechanischen Eigenschaften des aus der Glasfaser und dem organischen Polymeren bestehenden Laminats ist daher der chemische Aufbau dieses Bindemittels von entscheidender Bedeutung.

Wegen der erforderlichen guten Verträglichkeit zwischen der geschlichteten Glasfaser und den organischen Polymeren werden im allgemeinen solche Materialien als Filmbildner verwendet, die in ihrem chemischen Aufbau dem mit der Glasfaser zu verstärkenden Polymeren ähnlich sind.

So wird beispielsweise Polypropylen als Filmbildner auf Glasfasern verwendet, die in Polyolefine eingebaut werden (DE-OS 2 360 698).

Zum Beschlichten von Glasfasern wurden auch epoxidgruppenhaltige Polyester herangezogen. So wird in Plast. Massy 1972 (11), 11-13 ein Beschlichtungssystem beschrieben, das aus einem aus Epoxyharzen und oligomeren Polyethylenglykolmaleatphthalaten erhaltenen ungesättigten Epoxypolyester einerseits und Triethylenglykoldimethacrylat andererseits besteht. Dieses System liegt jedoch gelöst in einem organischen Lösungsmittel vor und läßt sich nicht ohne Entzündungsgefahr in unmittelbarer Nähe der über 1000°C heißen Glasspinndüsen auf die frisch gesponnenen Glasfilamente auftragen.

Wäßrige Zusammensetzungen zum Beschichten von Glasfasern mit epoxygruppenhaltigen Polyestern als Filmbildnern sind ebenfalls bekannt. In DE-OS 1 496 630 und DE-OS 1 669 584 wird beschrieben, daß die Umsetzungsprodukte partieller Monoalkoholester von Polycarbonsäuren mit Epoxyverbindungen in wäßrigen Beschichtungszusammensetzungen für Glasfasern verwendet werden können. Die beiden Veröffentlichungen offenbaren niedermolekulare Filmbildnerharze, welche jedoch nicht dispergierbar sind (DE-PS 2 443 128). Die meisten der dort beschriebenen Filmbildner führen zu wenig abriebfesten Schlichten, sowie zu unzureichenden mechanischen Werten der so gewonnenen Laminate, zu Verfärbungen und schlechter Wasserfestigkeit.

In dem US-Patent 4 423 201 wird ein hydrophiler bifunktioneller Polyether mit einem Isocyanat zu einem Isocyanat-Prepolymeren umgesetzt, welches mit einem 2-wertigen Phenol (Bisphenol A) zu phenolgruppenhaltigen Verbindungen umgesetzt wird. Diese können wiederum mit 2-wertigen Epoxidharzen zu Epoxid-Gruppen enthaltenden Emulgatoren umgesetzt werden. Ein Nachteil dieser Produkte ist das Vorhandensein von Urethangruppierungen, von denen ein Teil aromatische Phenole darstellen. Diese sind bekanntermaßen thermisch und gegenüber Nucleophilen nicht sonderlich stabil und eignen sich daher wenig zur Verwendung in Schlichten.

Andere Patente (DE 3 109 900, US 3 459 585, US 4 049 597) wiederum beschreiben Emulgatoren, die aus aliphatischen Epoxidharzen aufgebaut sind. Es ist aber bekannt, daß aliphatische Epoxid-Verbindungen den aromatischen bezüglich der mechanischen Eigenschaften und der Widerstandsfähigkeit der Filme unterlegen sind. Deshalb müssen diesen Dispersionen teilweise noch weitere Filmbildner wie z.B. Polyvinylpyrrolidon zugegeben werden, wodurch die Verwendung dieser Emulgatoren sehr nachteilig ist.

In dem US-Patent 3 437 517 werden Halbester aus kurzkettigen Alkoholen oder Oligoethern und Carbonsäureanhydriden mit Diepoxiden zur Reaktion gebracht. Es resultieren wasserunlösliche, nur mit zusätzlichen Emulgatoren in Wasser dispergierbare Harze.

In EP 0 081 163 werden Emulgatoren für Epoxidharze beschrieben, die durch direkte Reaktion von Polyalkylenglykolen mit Molgewichten von 200 bis 20 000 mit Polyglycidylethern mehrwertiger Phenole erhalten werden. Zur Dispergierung müssen bei diesen Verbindungen bis zu 20 % organische Hilfslösungsmittel wie z.B. Toluol verwendet werden. Diese Lösungsmittel verbleiben in der fertigen Dispersion, welche z.B. wegen der damit verbundenen Sicherheitsrisiken für Glasfaserschlichten nicht eingesetzt werden kann und zudem physiologisch nicht unbedenklich ist. Andererseits erfordert das in diesem Patent vorgeschlagene Verfahren des Einengens und Abziehens des organischen Lösungsmittels aus der fertigen Dispersion einen weiteren Arbeitsgang. Zudem ist auf diesem Weg eine vollkommen von organischen Lösungsmitteln freie Dispersion nicht herstellbar, da geringe Mengen an Rest-Lösungsmittel zurückbleiben.

Gegenstand der DE-PS 2 943 128 sind wäßrige Schlichtemittel für Glasfasern, welche als Filmbildner in Wasser emulgierbare, mit Polyethereinheiten und Epoxygruppen modifizierte Polyester enthalten, bei denen die modifizierten Polyester 4-13 Gew.-% Polyethylenoxideinheiten mit Molgewichten zwischen 370 bis 3000 und 25-50 Gew.-% Polypropylenoxideinheiten mit Molgewichten von 116 bis 2000 kondensiert enthalten und einen Restgehalt an Epoxysauerstoff von 0,02-0,7 Gew.-% enthalten. Mit diesen Schlichten hergestellte Glasfaserverbundwerkstoffe sind in ihren Eigenschaften, insbesondere Biegefestigkeit und Naßfestigkeit, nicht befriedigend.

Aufgabe war es daher, Schlichten zur Verfügung zu stellen, welche die oben beschriebenen Nachteile nicht aufweisen. Die Schlichten sollten chemisch stabil und in Wasser dispergierbar sein und ohne Stabilisatoren sowie ohne zusätzliche Emulgatoren auskommen. Die mit solchen Schlichten beschichteten Glasfasern müssen gute Verarbeitungseigenschaften wie hohe Abriebfestigkeit der Faserbündel, geringe Filamentisierung und geringe Flusenbildung aufweisen. Die Einarbeitung der geschlichteten Glasfasern in Kunststoffe sollte einfach durchführbar sein unter gleichzeitiger Verbesserung der Biegefestigkeit, Transparenz und Tränkung der glasfaserverstärkten Kunststoffe.

Eine weitere Aufgabe war es, ein vereinfachtes Herstellungsverfahren für wäßrige Dispersionen zur Verfügung zu stellen.

Überraschenderweise wurde gefunden, daß wäßrige Dispersionen bestimmter Zusammensetzung sich als Filmbildner in Schlichtemitteln eignen und außerdem beim Einsatz auf geschlichteten Glasfasern sowie in mit diesen geschlichteten Glasfasern verstärkten Kunststoffen die Eigenschaften der Produkte verbessern. Außerdem wurde ein einfaches Verfahren zur Herstellung dieser wäßrigen Dispersionen bestimmter Zusammensetzung gefunden, daß saubere, weiße Dispersionen liefert und zudem schnell und kostengünstig durchführbar ist.

Gegenstand der vorliegenden Erfindung sind wäßrige Dispersionen, welche ein Gemisch aus mit Polyethereinheiten und Epoxygruppen modifizierten Polyestern und Epoxidharzen enthalten, wobei das Gemisch ein Reaktionsprodukt aus

a) langkettigen, aliphatischen, hydrophilen, hydroxyfunktionellen Polyethern mit mindestens 30 Gew.-%, bevorzugt 40-80 Gew.-% Ethylenoxideinheiten,
b) aliphatischen, cycloaliphatischen oder aromatischen Dicarbonsäuren und/oder Dicarbonsäurederivaten sowie
c) mehr als eine Epoxidgruppe pro Molekül enthaltenden Verbindungen ist,

wobei der Restgehalt an Epoxid-Sauerstoff zwischen 0,5 und 15 Gew.-%, vorzugsweise zwischen 0,5 und 10 Gew.-%, besonders bevorzugt zwischen 1 und 8 Gew.-% liegt und wobei das Gemisch ohne zusätzlichen Emulgator dispergierbar ist.

Die Polyether sind vorzugsweise mono- oder bihydroxyfunktionelle Polyether mit einem Molekulargewicht zwischen 370 und 5000, bevorzugt zwischen 1500 und 3000.

Als aliphatische, cycloaliphatische oder aromatische Dicarbonsäuren werden bevorzugt Säuren mit 4-12 C-Atomen und deren Derivate eingesetzt.

Eine weitere besondere Ausführungsform liegt im Einsatz von Dicarbonsäuren und/oder deren Derivaten mit ethylenisch ungesättigten Gruppen im Molekülgerüst.

Der Gehalt an ethylenisch ungesättigten Gruppen beträgt vorzugsweise mindestens 0,15 m Äquivalent bezogen auf 100 g Feststoff in der wäßrigen Dispersion.

Als besonders vorteilhaft hat sich die Verwendung von Maleinsäureanhydrid als Dicarbonsäurederivat erwiesen.

Die mehr als eine Epoxidgruppe pro Molekül enthaltenden Verbindungen werden vorzugsweise aus einer oder mehreren der Gruppen mit Epichlorhydrin kondensierter Polyphenole, Glycidylestern mit Polycarbonsäuren, epoxidierten aliphatischen oder cycloaliphatischen mehrfachen ungesättigten Olefinen und/oder den Glycidylderivaten stickstoffhaltiger Heterocyclen gewählt.

Weiterer Gegenstand der Erfindung ist ein Verfahren zur Herstellung der wäßrigen Dispersionen enthaltend ein Gemisch aus mit Polyethereinheiten und Epoxygruppen modifizierten Polyestern und Epoxidharzen, indem man die Komponenten a), b) und c) in einem organischen Lösungsmitel zusammen reagieren läßt, das Lösungsmittel vor der Dispergierung in Wasser entfernt und die Dispergierung ohne zusätzlichen Emulgator durchgeführt wird. Bevorzugte organische Lösungsmittel sind aromatische und cyclische oder nicht cyclische aliphatische gesättigte Kohlenwasserstoffe und Ether mit 4 bis 15 Kohlenstoffatomen wie z.B. Dioxan, Toluol, Xylol oder Methylcyclohexan.

Die erfindungsgemäßen wäßrigen Dispersionen werden als Filmbildner in Schlichtemitteln verwendet. Diese mit den erfindungsgemäßen Filmbildnern versehenen Schlichten werden bei der Herstellung von geschlichteten Glasfasern verwendet, die wiederum bei der Herstellung von glasfaserverstärkten Kunststoffen verwendet werden, wobei bevorzugt Epoxidharze und ungesättigte Polyesterharze verstärkt werden.

Die erfindungsgemäßen Dispersionen vereinen sehr gute Emulgierfähigkeiten bei guter Stabilität mit guten Filmbildnereigenschaften auf den Glasfasern. Weiterhin ergeben sich erheblich verbesserte mechanische Eigenschaften (wie Biegefestigkeit und Naßfestigkeit, vgl. auch Tabelle 2) der Glasfaserverbundwerkstoffe, wenn die Glasfasern mit diesen als Filmbildner verwendeten Dispersionen beschlichtet werden, verbunden mit ebenfalls verbesserten Verarbeitungseigenschaften. Bemerkenswert ist auch die geringe Flusenbildung bei der Verarbeitung der Rovings zu Laminaten.

Um eine zu geringe Haltbarkeit der Dispersion zu verhindern muß der verwendete Polyether mindestens 30 % Ethylenoxideinheiten aufweisen. Dies ist auch für die notwendige Elektrolyt-und pH-Stabilität in der Schlichteformulierung notwendig. Ein hoher Restgehalt an Epoxidgruppen, mindestens 0,5 % an Epoxidsauerstoff, ist ebenfalls wesentlich, um die guten Eigenschaften der Schlichte und der daraus hergestellten Glasfasern zu erhalten.

Im folgenden werden beispielhaft Ausführungsformen der Erfindung zur näheren Erläuterung dargelegt, ohne daß diese die Erfindung einschränken.

Zur Herstellung der erfindungsgemäßen wäßrigen Dispersionen werden in einer Ausführungsform zunächst durch Umsetzung der Polyether mit Dicarbonsäure(n) und/oder -derivat(en) carboxyfunktionelle Polyetherester entweder in der Schmelze oder in Lösung hergestellt, die in einer zweiten Stufe bei 60-150° C, bevorzugt bei 80-110° C mit mehr als eine Epoxidgruppe pro Molekül enthaltenden Verbindungen zu mit Epoxidgruppen modifizierten Polyetherestern umgesetzt werden, so daß das entstehende Polymer eine Säurezahl von < 3 mg KOH/g enthält. Zu diesem Reaktionsprodukt, das als solches bereits zur Beschlichtung der Glasfasern geeignet wäre, werden weitere gegebenenfalls auch modifizierte Epoxidharze zugesetzt. Die Mischung erfolgt vorzugsweise wegen der geringeren Viskosität bei 80-100° C. Dabei ist Sorge zu tragen, daß die Temperatur nicht zu hoch wird, um unerwünschte Vernetzungen zu verhindern.

In einer weiteren Ausführungsform werden, mit Dicarbonsäuren und/oder -derivaten modifizierte Epoxidharze mit dem mit Epoxidgruppen modifizierten Polyetherester entweder in der Schmelze oder in Lösung gemischt. Diese mit Dicarbonsäuren und/oder -derivaten modifizierten Epoxidharze können in einem separaten Arbeitsgang hergestellt werden und zu dem mit Epoxidgruppen modifizierten Polyetherester zugemischt werden. Die Reaktionen in der Schmelze sind im Prinzip bekannt und z.B. im Houben-Weyl (1963, 4. Auflage) Bd. XIV/2, S. 507 beschrieben. Die getrennte Herstellung ist allerdings nicht bevorzugt. Wegen der einfacheren Durchführung ist vielmehr folgende Ausführungsform bevorzugt:

Zu dem mit Epoxidgruppen modifizierten Polyetherester werden entweder in der Schmelze oder in Lösung die entsprechenden Mengen Dicarbonsäuren und/oder -derivate sowie Epoxidharz bei 60-120° C, bevorzugt bei 70-110° C, zugegeben. Bei dieser Temperatur läßt man die Komponenten miteinander reagieren, bis die Gesamtsäurezahl unter < 3 mg KOH/g liegt. Es ist dabei zu beachten, daß eine Diepoxidverbindung im Vergleich zu Dicarbonsäure und/oder -derivat in einem Überschuß von 1,5-5 Mol pro Mol Säure vorliegt. Bei einem zu geringen Überschuß besteht die Gefahr der Vernetzung, die eine weitere Verarbeitung unmöglich machen bzw. die Dispergierung verhindern oder unnötig erschweren würde.

In einer weiteren speziellen Ausführungsform werden in einem Arbeitsgang entweder in der Schmelze oder in Lösung die gesamte Menge an Polyether, Dicarbonsäure und/oder -derivat sowie die mehr als eine Epoxidgruppe pro Molekül enthaltende Verbindung zusammengegeben und bei 60-120° C, bevorzugt bei 70-110° C, zur Reaktion gebracht, bis die Gesamtsäurezahl < 3 mg KOH/g beträgt.

In einer besonders bevorzugten Ausführungsform wird als Dicarbonsäurederivat Maleinsäureanhydrid verwendet. Wegen der Reaktivität und des zusätzlichen Vorhandenseins ethylenisch ungesättigter Gruppen im Molekülgerüst lassen sich hiermit besonders gute Ergebnisse erzielen. Dies ist umso überraschender, als die DE 2 943 128 lehrt, daß Maleinsäure nur in untergeordneter Menge vorhanden sein darf. Außerdem ist Maleinsäureanhydrid eine preiswerte Dicarbonsäurekomponente.

Bevorzugt ist das Verfahren zur Herstellung der erfindungsgemäßen wäßrigen Dispersionen, bei dem die Reaktion der Komponenten anstelle in der Schmelze in einem organischen Lösungsmittel durchgeführt wird. Vor der Dispergierung in Wasser wird das Lösungsmittel abdestilliert. Vorteil dieser Vorgehensweise ist eine verkürzte Reaktionszeit und bedingt dadurch eine erhebliche Verringerung der Herstellkosten. Weiterhin werden bei dieser Reaktionsführung erheblich weniger stark gefärbte wäßrige Dispersionen und damit weiße nicht verfärbte Glasfasern erhalten. Bei der Reaktion in der Schmelze werden normalerweise bräunlich gefärbte Dispersionen erhalten. Im Falle der Verwendung von leicht sublimierbaren Edukten wie z.B. Maleinsäureanhydrid wird die Reaktionsführung außerdem erheblich vereinfacht, wenn in Lösung anstatt in der Schmelze gearbeitet wird.

Insbesondere bei der Duromerenverstärkung (Epoxidharze, ungesättigte Polyesterharze) mit erfindungsgemäß geschlichteten Glasfasern lassen sich überraschend gute Eigenschaften dieser Harze erzielen. Man erhält die für die guten Verarbeitungseigenschaften von geschlichteten Glasfasern erforderlichen, weichen Filme verbunden mit einer sehr guten Ankopplung, wie aus den verbesserten mechanischen Eigenschaften glasfaserverstärkten Dutomeren ersichtlich.

Es ist bei all diesen Verfahren darauf zu achten, daß am Ende der Restgehalt an Epoxidsauerstoff in der Dispersion zwischen 0,5 und 15 Gew.-%, bevorzugt zwischen 0,5 und 10 Gew.-%, besonders bevorzugt zwischen 1 und 8 Gew.-% liegt.

Zur Dispergierung wird das Polymergemisch vorgelegt und bei 10-90° C, bevorzugt bei 30-40° C, langsam mit Wasser der entsprechenden Temperatur versetzt. Es entsteht eine feinteilige, weiße, stabile Dispersison, die bei Raumtemperatur mindestens 5 Monate ohne Sedimentierung haltbar ist.

Die erfindungsgemäße Mischung der modifizierten Polyester und Epoxidharze ist in Wasser selbstemulgierend. Selbstverständlich kann der Dispergiervorgang durch Zugabe wassermischbarer organischer Lösungsmittel, durch Neutralisation der Restsäurezahl mit anorganischen oder organischen basischen Verbindungen oder durch Zusatz von Emulgatoren zusätzlich unterstützt werden, jedoch ist dieses Vorgehen nicht bevorzugt. Die Mischung kann durch Zugabe von entionisiertem Wasser in Dispersionen oder kolloidale Lösungen mit Festkörpergehalten von 5-60 Gew.-%, vorzugsweise 20-55 Gew.-% überführt werden.

Als Polyether zur Herstellung der mit Epoxidgruppen modifizierten Polyetherester werden alle mono- oder hydroxybifunktionellen Polyether verwendet, die mindestens 30 Gew.-%, bevorzugt 40-80 Gew.-% Ethylenoxideinheiten besitzen. Die Molekulargewichte liegen zwischen 370 und 3000, bevorzugt zwischen 1000 und 3000.

Als Dicarbonsäuren und/oder -derivate eignen sich aromatische, gesättigte oder vorzugsweise ungesättigte cycloaliphatische oder aliphatische Dicarbonsäuren und/oder -derivate wie -anhydride mit 4 bis 12 Kohlenstoffatomen wie beisielsweise Phthalsäure, Isophthalsäure, Terephthalsäure, Hexahydrophthalsäure, Hexahydroisophthalsäure, Hexahydroterephthalsäure, Methyltetrahydrophthalsäure, Tetrahydrophthalsäure, Endomethylentetrahydrophthalsäure, Endoethylentetrahydrophthalsäure, Tricyclo-[5,2,1,0$^{2.6}$]-decan-dicarbonsäure, Bernsteinsäure, $C_1$-$C_8$-Alkylbernsteinsäure, $C_{2-8}$-Alkenylbernsteinsäure, Glutarsäure, Adipinsäure, Korksäure, Azelainsäure, Sebacinsäure, Dodecandisäure, Fumarsäure und Maleinsäure sowie deren Anhydride, wobei Maleinsäureanhydrid besonders bevorzugt ist.

Die mehr als eine Epoxygruppe pro Molekül enthaltenden Verbindungen können sein:
durch Umsetzung von Polyphenolen wie z.B. Bisphenol A, oder von Novolaken mit Epichlorhydrin gewonnene Epoxyharze, durch Epoxydierung mehrfacher cycloaliphatischer oder aliphatischer Olefine, welche Ester- oder Etherbrücken enthalten können, gewonnene mehrfache Epoxide, wie z.B. 3,4-Epoxycyclohexylmethyl-3,4-epoxycyclohexancarboxylat, Bis-(3,4-Epoxycyclohexyl-mehtyl)-maleat, Bis-(2,3-Epoxycyclopentyl)-ether, Ethylenglykol-bis-(3,4-epoxycyclohexancarboxylat), Limonendiepoxid, 1,2,5,6-Diepoxycycloocten, Dicyclopentadiendiepoxid, Vinylcyclohexandiepoxid, Glycidylester von Polycarbonsäuren, wie z.B. Phthalsäurebisglycidylester, Hexahydrobenzoesäurebisglycidylester, Tetrahydrophthalsäurebisglycidylester, 4,5-Epoxy-tetrahydrophthalsäurebisglycidylester, Epoxyderivate stickstoffhaltiger Heterocyclen, wie z.B. Tris-glycidyl-cyanurat, Trisglycidylisocyanurat oder Bisglycidylhydantoine.

Aus den erfindungsgemäßen wäßrigen Dispersionen, den Haftvermittlern, Gleitmitteln und Hilfsstoffen, wie Netzmitteln oder Antistatika, werden auf übliche Weise die erfindungsgemäßen Schlichten hergestellt (siehe K.L. Löwenstein, l.c., S. 287 ff.). Diese werden auf bekannte Weise, d.h. mit Hilfe geeigneter Vorrichtungen, wie z.B. Sprüh- oder Walzensystemen auf die mit hoher Geschwindigkeit aus Spinndüsen gezogenen Glasfilamente sofort nach ihrem Erstarren, d.h. noch vor dem Aufwickeln, aufgetragen. Es ist auch möglich, die Fasern im Anschluß an den Spinnprozeß in einem Tauchbad zu beschichten.

Die geschlichteten feuchten Glasfasern werden anschließend bei Temperaturen von 90 bis 160° C getrocknet und dann zu Rovings, Matten, Geweben, Schnitt-, Kurzglas usw. verarbeitet. Unter Trocknung ist dabei nicht allein die Entfernung von Wasser und anderen flüchtigen Bestandteilen zu verstehen, sondern auch das Festwerden der Schlichtebestandteile, insbesondere des Filmbildners. Erst nach beendeter Trocknung hat sich die Schlichte in eine feste Überzugsmasse verwandelt.

Das erfindungsgemäße Gemisch ist in einer erfindungsgemäßen Schlichte in einer Menge von 0,6 bis 12 Gew.-%, berechnet als Feststoff, enthalten. Konzentrationen unter 0,6 Gew.-% geben nur einen ungenügenden Schutzfilm auf den Glasfasern. Höhere Konzentrationen als 12 Gew.-% ergeben zu dicke Überzugsschichten, die zu einer Schwächung des mit derartig geschlichteten Glasfasern hergestellten verstärkten Kunststoffes führen. Außerdem empfiehlt es sich aus Kostengründen nicht, noch größere Mengen Filmbildner auf die Faser aufzubringen. Vorzugsweise wird die Konzentration des Gemisches in einer erfindungsgemäßen Schlichte zwischen 1,0 und 7 Gew.-%, bezogen auf Feststoff, gewählt. Der Auftrag einer solchen Schlichte führt erfahrungsgemäß zu einer Beladung der getrockneten Fasern mit Schlichtebestandteilen, d.h. zu einem Schlichtegehalt von etwa 0,2 bis 2 Gew.-%, bezogen auf geschlichtete Fasern, wobei der Filmbildner mengenmäßig in der Regel überwiegt. Schlichtegehalte in dem genannten Bereich werden sowohl vom technischen Standpunkt als auch aus wirtschaftlichen Überlegungen für die erfindungsgemäß geschlichteten Glasfasern für die Verstärkung von ungesättigten Polyesterharzen und Epoxyharzen, aber auch von Thermoplasten, als optimal angesehen. Selbstverständlich können den erfindungsgemäßen Schlichten auch noch weitere Filmbildner, wie z.B. vom Polyurethantyp, vom Polyvinylacetat-Typ oder vom Polyestertyp beigemengt werden.

Die Konzentrationen des Silan-Haftvermittlers (wie z.B. Vinyltrimethoxysilan, Vinyltriethoxysilan, Vinyl-tris-($\beta$-methoxyethoxy)-silan, $\gamma$-Methacryloxypropyltrimethoxysilan, $\gamma$-Methacryloxypropyl-tris-($\beta$-methoxyet-hoxy)-silan, $\gamma$-Glycidoxypropyl-trimethoxy-silan, $\beta$-(3,4-Epoxyyclohexyl)-ethyltrimethoxysilan) in den erfindungsgemäßen Schlichten beträgt 0,05 bis 1,5 Gew.-%, vorzugsweise jedoch 0,15 bis 0,85 Gew.-%, bezogen auf die gesamte Schlichte. Konzentrationen über 1,5 Gew.-% sind einerseits wegen der Bildung relativ dicker Silikonschichten auf den Glasfasern, die bekannterweise den Verbund zwischen den Glasfasern und dem zu verstärkenden Kunststoff eher schwächen als verbessern, unerwünscht, und andererseits wegen der technisch schwer zugänglichen und daher kostspieligen Silane auch unwirtschaftlich. Bei Konzentrationen unter 0,05 Gew.-% ist die Wirksamkeit der Silan-Haftvermittler im allgemeinen nicht ausreichend.

Konzentrationen zwischen 0,05 und 0,15 Gew.-% werden dann gewählt, wenn das Aufbringen der Schlichte auf die Glasfasern nicht während des Spinnprozesses, d.h. in Bruchteilen einer Sekunde, sondern beispielsweise durch Tränkung der Glasfasern in einem Schlichtebad erfolgt, was aus praktischen Gründen weitaus längere Zeit erfordert, und in welcher eine wesentlich höhere Ausnutzung der Schlichte möglich ist, als beim Auftrag der Schlichte während des Spinnprozesses.

Die erfindungsgemäßen Schlichten enthalten nichtionische und/oder kationische Gleitmittel, die z.B. aus folgenden Stoffgruppen bestehen können:
Polyalkylenglykolether von Fettalkoholen oder Fettaminen, Polyalkylenglykolester und Glycerinester von Fettsäuren mit 12 bis 18 C-Atomen, Polyalkylenglykole, höhere Fettsäureamide mit 12 bis 18 C-Atomen von Polyalkylenglykolen und/oder Alkenylaminen, quartäre Stickstoffverbindungen, z.B. ethoxylierte Imidazoliniumsalze, Mineralöle, Wachse.

Das Gleitmittel wird vorteilhaft allein oder in Kombination mit anderen in einer Gesamtkonzentration zwischen 0,05 und 1,5 Gew.-%, bezogen auf die gesamte Schlichte, angewendet.

Daneben können die Schlichten noch Antistatika, wie z.B. Lithiumchlorid, Ammoniumchlorid, Cr-III-Salze, organische Titanverbindungen, Arylalkylsulfate oder -sulfonate, Arylpolyglykolethersulfonate oder quartäre Stickstoffverbindungen, enthalten. Sie werden allein oder in Kombination miteinander vorteilhaft in Konzentrationen von 0,01 bis 0,8 Gew.-%, bezogen auf die gesamte Schlichte, angewendet.

Zur Herstellung der erfindungsgemäß geschlichteten Glasfasern sind die für die Glasseidenfabrikation verwendeten, bekannten Glastypen, wie E-, A-, C- und S-Glas geeignet. Unter den genannten Glastypen für die Herstellung von Endlosglasfasern besitzen die E-Glasfasern die größte Bedeutung für die Verstärkung von Kunststoffen. Denn im Gegensatz zu A- und C-Glas ist E-Glas nahezu alkalifrei, woraus sich seine guten Elektroisolier-Eigenschaften und seine höhere Beständigkeit bei Einwirkung von Wasser oder Alkalien ableitet. Auch bezüglich der Zugfestigkeit und des Elastizitätsmoduls sind E-Glasfasern den A-Glasfasern überlegen.

Die mit den erfindungsgemäßen Glasfasern verstärkten Kunststoffe können hergestellt werden, indem man die geschlichteten Glasfäden mit flüssigen Reaktionsharzmassen, die gegebenenfalls Lösungsmittel und/oder andere Zusätze enthalten können, in Tränkbädern, Formen oder durch Sprühen imprägniert und anschließend gegebenenfalls unter Formgebung in den gehärteten Zustand überführt. Unter Reaktionsharzmassen versteht man verarbeitungsfertige Mischungen aus Reaktionsharzen und Reaktionsmitteln. Reaktionsharze sind flüssige oder schmelzbare Stoffe, die nach Zugabe der Reaktionsmittel, gegebenenfalls unter zusätzlicher Wärmezufuhr, in hochmolekulare, meist vernetzbare Produkte umgewandelt werden.

Neben den bereits aufgeführten Reaktionsmassen von ungesättigten Polyesterharzen und Epoxidharzen können gegebenenfalls auch andere gebräuchliche duroplastische oder thermoplastische Kunststoffe, wie z.B. Phenol-Formaldehyd-Harze, Polyurethane, Polycarbonate, Polyamide, Polybutylenterephthalate, Polyethylenterephthalate und Polyolefine mit den erfindungsgemäß geschlichteten Glasfasern zu glasfaserverstärkten Formkörpern umgesetzt werden. Die Einarbeitung der Glasfasern erfolgt bei den thermoplastischen Kunststoffen z.B. in Form von Schnittglas, das in Extrudern mit den aufgeschmolzenen Thermoplasten vermischt, zu Strängen gepreßt und zu Kunststoffgranulat verarbeitet wird. Dieses Granulat dient als Ausgangsbasis zur Herstellung von Formteilen und Gegenständen aus glasfaserverstärktem, thermoplastischem Kunststoff.

Die vorliegende Erfindung soll anhand der nachfolgenden Ausführungsbeispiele näher erläutert werden, ohne daß hierin eine Einschränkung zu sehen ist.

Beispiele

1. Herstellung der wäßrigen Dispersionen

A) Ein-Stufen-Verfahren (s. Tabelle 1, Versuch 1, 2 und 12)

Der Polyether wird vorgelegt und 30 Minuten bei 120° C im Vakuum entwässert. Anschließend wird bei 80° C Maleinsäureanhydrid zugegeben und bei 80° C gerührt, bis die Reaktion beendet ist. Dann wird die mehr als eine Epoxidgruppe pro Molekül enthaltende Verbindung zugegeben und bei derselben Temperatur gerührt, bis die Säure abreagiert ist (Säurezahl < 3 mg KOH/g). Der Gehalt an restlichem Epoxidsauerstoff wird bestimmt. Bei 30-40° C wird in das Reaktionsprodukt langsam das für eine 40 %ige Disperison benötigte Wasser gegeben.

B) Zwei-Stufen-Verfahren (s. Tabelle 1, Versuch 3-11 und 13)

Der Polyether wird vorgelegt und 30 Minuten bei 120° C im Vakuum entwässert. Anschließend wird bei 80° C die angegebenen Menge Maleinsäureanhydrid zugegeben und bei 80° C gerührt, bis die Reaktion beendet ist, also die theoretische, berechnete Säurezahl erreicht ist. Dann wird der angegebene Teil der mehr als eine Epoxidgruppe pro Molekül enthaltenden Verbindung zugegeben und bei derselben Temperatur gerührt, bis die Säure abreagiert ist (Säurezahl < 3 mg KOH/g). Jetzt werden die restlichen Mengen Anhydrid und der mehr als eine Epoxidgruppe pro Molekül enthaltenden Verbindung zugegeben und ebenfalls bei 80° C gerührt, wiederum bis die Säure abreagiert ist (Säurezahl < 3 mg KOH/g). Der Gehalt an restlichem Epoxidsauerstoff wird bestimmt. Bei 30-40° C wird in das Reaktionsprodukt das für eine 40 %ige Dispersion benötigte Wasser langsam eingetragen.

c) Herstellung im organischen Lösungsmittel (s. Tabelle 1, Versuch 14)

2240 g Polyether, 98 g Maleinsäureanhydrid (MSA), 250 g Toluol und 5,6 g Hydrochinon werden vorgelegt und unter Durchleiten von Stickstoff auf 120° C erwärmt. Nach ca. 30-35 Stunden ist eine Säurezahl von 23-27 mg KOH/g erreicht. Es werden dann 500 g Epoxid zugegeben und bei 120° C unter Durchleiten von Stickstoff gerührt, bis die Säurezahl unter 3 mg KOH/g liegt. Anschließend werden 2500 g Epoxid und 244 g MSA zugeführt und bei 120° C gerührt, bis eine Säurezahl kleiner 3 mg KOH/g erreicht ist. Dann wird bei etwa 100° C unter Vakuum das Toluol entfernt. Das Harz wird auf etwa 55° C abgekühlt, und 8350 g Wasser mit einer Temperatur von ebenfalls etwa 55° C wurden zugegeben. Bei 55° C wird 1 Stunde nachgerührt. Unter weiterem Rühren wird die Temperatur innerhalb von ca. 3 Stunden auf

7

Raumtemperatur gebracht. Man erhält eine weiße feinteilige Dispersion.

Tabelle 1

| Versuch | Polyether [g]* | 1. Stufe | | | 2. Stufe | | Epoxid-Sauerstoff [%] | Gehalt an -CH=CH- [m Äquivalent/ 100 g Feststoff] |
|---|---|---|---|---|---|---|---|---|
| | | MSA+ [g] | Epoxid ** | Epoxid [g] | MSA+ [g] | Epoxid [g] | | |
| 1 | 2250 | 98 | 1 | 340 | - | - | 0,60 | 0,37 |
| 2 | 2250 | 98 | 2 | 500 | - | - | 0,56 | 0,35 |
| 3 | 2250 | 98 | 2 | 500 | 245 | 2500 | 1,72 | 0,63 |
| 4 | 2250 | 98 | 2 | 500 | 490 | 5000 | 2,11 | 0,72 |
| 5 | 2250 | 98 | 2 | 500 | 735 | 7500 | 2,31 | 0,77 |
| 6 | 2250 | 98 | 2 | 500 | 367,5 | 3750 | 1,95 | 0,68 |
| 7 | 2250 | 98 | 3 | 380 | 245 | 1900 | 1,97 | 0,72 |
| 8 | 2250 | 98 | 3 | 380 | 490 | 3800 | 2,51 | 0,85 |
| 9 | 2250 | 98 | 3 | 380 | 735 | 5700 | 2,79 | 0,93 |
| 10 | 2250 | 98 | 4 | 260 | 245 | 1300 | 2,31 | 0,84 |
| 11 | 2250 | 98 | 4 | 260 | 490 | 2600 | 3,09 | 1,05 |
| 12 | 2250 | 343 | 2 | 3000 | - | - | 1,80 | 0,63 |
| 13 | 2250 | 98 | 2 | - | - | 2500 | 3,17 | 0,21 |
| 14 | 2240 | 98 | 2 | 500 | 244 | 2500 | 1,81 | 0,64 |

Anmerkungen zu Tabelle 1
_____

Beschreibung der Edukte:

*) Polyether: auf Butanol gestarteter, monofunktioneller
Polyether mit 63,5 % Ethylenoxid- und
36,5 % Propylenoxid-Einheiten
OH-Zahl ca. 25 mg KOH/g

**) Epoxide :

1 = Epoxidharz (mit Epichlorhydrin kondensierte Polyphenole) mit einem Epoxidäquivalent
von 170 (®Lekutherm X18)
2 = von 250 (®Epicote 834)
3 = von 190 (®Lekutherm X20)
4 = von 130 (®Lekutherm X50)

+) MSA: Maleinsäureanhydrid

2. Herstellung der Schlichte

In einem Mischbehälter wird ca. 2/3 der Gesamtmenge Wasser vorgelegt und mit Essigsäure auf pH 3,5 angesäuert. Das γ-Methacryloxypropyl-trimethoxysilan wird zugegeben und ca. 15. Min. bis zur kompletten Hydrolyse gerührt. Nun wird der pH-Wert mit Ammoniakwasser auf 4,5 bis 5,0 eingestellt, das β-(2,3-Epoxycyclohexyl)-ethyl-trimethoxysilan zugegeben und ebenfalls ca. 15 Min. hydrolysiert. Danach fügt man zuerst die wäßrige Dispersion und dann die übrigen Zusätze unter gutem Rühren zu. Nach Zugabe der restlichen Wassermenge weist die Schlichte einen pH-Wert von ca. 5 auf.

3. Prüfung der Verstärkungswirkung der erfindungsgemäß beschlichteten Glasfasern in ungesättigtem Polyesterharz

Zur Herstellung der Prüfkörper werden die nach bekannten Verfahren beschlichteten und mindestens 10 Stunden bei 130° C getrockneten Glasfasern in Form von Roving-Strängen (2400 tex) in paralleler Lage mit einer 60 gew.-%igen styrolischen Lösung eines ungesättigten Polyesterharzes imprägniert und dann mit konstanter Geschwindigkeit in ein mit Teflon beschichtetes Glasrohr eingezogen. Das imprägnierende Harz ist ein ungesättigtes Polyesterharz auf der Grundlage von Oligo-Propylenglykolphthalatmaleaten. Das im Poly-Tetrafluorethylenrohr befindliche Material wird auf bekannte Weise mittels Benzoylperoxid gehärtet. Man erhält so unidirektional verstärkte, ca. 6 mm dicke und 80 mm lange Rundstäbe (DIN-Entwurf 53 590). Der Glasfaseranteil beträgt 60 Gew.-%. An 10 derartigen Prüfkörpern wird nach DIN 53 454 die Druckfestigkeit (Biegefestigkeit) als Mittelwert von 10 Messungen bestimmt. Nach 6-stündiger Behandlung in siedendem Wasser bestimmt man den prozentualen Abfall der Biegefestigkeit an weiteren 10 Prüfkörpern gegenüber den gemittelten Trockenbiegefestigkeitswerten. Dieser prozentuale Abfall der Biegefestigkeit ist ein Maß für die in der Praxis der glasfaserverstärkten Kunststoffe besonders wichtige Erhaltung der gewünschten mechanischen Festigkeit der verstärkten Kunststoffe bei bzw. nach Einwirkung von Wasser bzw. bei Bewitterung (Ergebnisse siehe Tabelle 2).

4. Verarbeitungseigenschaften eines aus den erfindungsgemäß geschlichteten Glasfasern hergestellten Rovings (2400 tex)

An den geschlichteten Glasfasern wurden Eigenschaften wie Integrität der Fäden und Stränge, mechanische Festigkeit und Aussehen der Glasfaserlagen auf dem Roving, Schlichtewanderung, Verfärbungen der Fäden, Abriebfestigkeit und Flusenbildung beim Aufwickeln zu Rovings, Verschmutzungsgrad aller Apparateteile, welche die Glasfasern umlenken oder umwenden und, falls erforderlich, die Schneidbarkeit des Glasfaserfadens oder des Roving-Stranges beurteilt. Die Beurteilung der Verarbeitungseigenschaften geht ebenfalls aus Tabelle 2 hervor.

T a b e l l e   2

| Epoxidharz-Mischung lt. Tab.1. | Flusen [mg] | Verarbeitungs-eigenschaften | Laminat | Trans-parenz [%] | Biegefestig-keit [N/mm²]2) | Naßfestigkeit3) | | |
|---|---|---|---|---|---|---|---|---|
| | | | | | | frisch [N/mm²] | 2h, 100°C [N/mm²] | Δ [%] |
| 2 | 7 | 0 | + | 15 | 618 | 1322 | 1254 | 5,1 |
| 3 | 26 | + | + | 17 | 666 | 1272 | 1235 | 2,9 |
| 12 | 27 | + | + | 15 | 673 | 1302 | 1252 | 3,8 |
| 14 | 24 | + | + | 16 | 675 | 1300 | 1242 | 4,4 |
| Vergleich* | 50 | 0 | + | 13 | 550 | 1300 | 1150 | 11,5 |

*) Herkömmliche Epoxiddispersion nach DE 2 943 128

Beurteilung: + gut
0 befriedigend

1) bezogen auf die Lichtdurchlässigkeit reinen Glases gleicher Stärke
2) gemessen an Prüfkörpern, die aus Präzisionswickelrohren gesägt wurden
3) gemessen an Rundstäben

**Patentansprüche**

1. Wäßrige Dispersionen enthaltend ein Gemisch aus mit Polyethereinheiten und Epoxygruppen modifizierten Polyestern und Epoxidharzen, dadurch gekennzeichnet, daß das Gemisch ein Reaktionsprodukt

EP 0 311 894 B1

aus

a) langkettigen, aliphatischen, hydrophilen, hydroxyfunktionellen Polyethern mit mindestens 30 Gew.-%, bevorzugt 40-80 Gew.-% Ethylenoxideinheiten,

b) aliphatischen, cycloaliphatischen oder aromatischen Dicarbonsäuren und/oder Dicarbonsäurederivaten sowie

c) mehr als eine Epoxidgruppe pro Molekül enthaltenden Verbindungen ist,

wobei der Restgehalt an Epoxid-Sauerstoff zwischen 0,5 und 15 Gew.-%, vorzugsweise 0,5 und 10 Gew.-%, besonders bevorzugt zwischen 1 und 8 Gew.-% liegt und wobei das Gemisch ohne zusätzlichen Emulgator dispergierbar ist.

2. Wäßrige Dispersionen gemäß Anspruch 1 dadurch gekennzeichnet, daß die Polyether mono- oder bihydroxyfunktionelle Polyether mit einem Molekulargewicht zwischen 370 und 5000, vorzugsweise zwischen 1000 und 3000 sind.

3. Wäßrige Dispersionen gemäß einem der Ansprüche 1 oder 2 dadurch gekennzeichnet, daß die aliphatischen, cycloaliphatischen oder aromatischen Dicarbonsäuren Säuren mit 4-12 C-Atomen und deren Derivate sind.

4. Wäßrige Dispersionen gemäß einem der Ansprüche 1 bis 3, dadurch gekennzeichnet, daß die Dicarbonsäuren und/oder Dicarbonsäurederivate ethylenisch ungesättigte Dicarbonsäuren und/ oder Dicarbonsäurederivate sind.

5. Wäßrige Dispersionen gemäß Anspruch 4, dadurch gekennzeichnet, daß der Gehalt an ethylenisch ungesättigten Gruppen mindestens 0,15 m Äquivalent bezogen auf 100 g Feststoff in der wäßrigen Dispersion beträgt.

6. Wäßrige Dispersionen gemäß einem der Ansprüche 1 bis 5 dadurch gekennzeichnet, daß als Dicarbonsäurederivat Maleinsäureanhydrid eingesetzt wird.

7. Wäßrige Dispersionen gemäß einem der Ansprüche 1 bis 6 dadurch gekennzeichnet, daß die mehr als eine Epoxidgruppe pro Molekül enthaltenden Verbindungen aus einer oder mehreren der Gruppen mit Epichlorhydrin kondensierter Polyphenole, Glycidylestern von Polycarbonsäuren, epoxidierten aliphatisch oder cycloaliphatischen mehrfach ungesättigten Olefinen und/oder den Glycidylderivaten stickstoffhaltiger Heterocyclen gewählt sind.

8. Verfahren zur Herstellung von wäßrigen Dispersionen gemäß einen der Ansprüche 1 bis 7, dadurch gekennzeichnet, daß die Komponenten a), b) und c) in einem organischen Lösungsmittel, vorzugsweise in einem aromatischen oder cyclischen oder nicht cyclischen aliphatischen gesättigten Kohlenwasserstoff oder einem Ether mit vier bis 15 Kohlenstoffatomen, zur Reaktion gebracht werden, das Lösungsmittel vor der Dispergierung in Wasser entfernt wird, und dann die Dispergierung ohne zusätzlichen Emulgator durchgeführt wird.

9. Verwendung der wäßrigen Dispersionen gemäß einem der Ansprüche 1 bis 7 als Filmbildner in Schlichtemitteln.

10. Verwendung der wäßrigen Dispersionen gemäß einem der Ansprüche 1 bis 7 zur Herstellung von geschlichteten Glasfasern.

11. Verwendung der wäßrigen Dispersionen gemäß einem der Ansprüche 1 bis 7 zur Herstellung von mit geschlichteten Glasfasern verstärkten Kunststoffen.

12. Verwendung der wäßrigen Dispersionen gemäß einem der Ansprüche 1 bis 7 zur Herstellung von mit geschlichteten Glasfasern verstärkten Epoxydharzen und ungesättigten Polyesterharzen.

**Claims**

1. Aqueous dispersions containing a mixture of polyesters and epoxy resins modified with polyether units and epoxy groups, characterised in that the mixture is a reaction product of

12

EP 0 311 894 B1

a) long chain, aliphatic, hydrophilic, hydroxy-functional polyethers containing at least 30 % by weight, preferably 40-80 % by weight, of ethylene oxide units,

b) aliphatic, cycloaliphatic or aromatic dicarboxylic acids and/or dicarboxylic acid derivatives, and

c) compounds containing more than one epoxide group per molecule,

wherein the residual content of epoxide oxygen is between 0.5 and 15 % by weight, preferably between 0.5 and 10 % by weight, most preferably between 1 and 8 % by weight, and wherein the mixture is dispersible without an additional emulsifier.

2. Aqueous dispersions according to claim 1, characterised in that the polyethers are mono- or bihydroxy-functional polyethers with a molecular weight between 370 and 5000, preferably between 1000 and 3000.

3. Aqueous dispersions according to either one of claims 1 or 2, characterised in that the aliphatic, cycloaliphatic or aromatic dicarboxylic acids are acids containing 4-12 C atoms and their derivatives.

4. Aqueous dispersions according to any one of claims 1 to 3, characterised in that the dicarboxylic acids and/or dicarboxylic acid derivatives are ethylenically unsaturated dicarboxylic acids and/or dicarboxylic acid derivatives.

5. Aqueous dispersions according to claim 4, characterised in that the content of ethylenically unsaturated groups is at least 0.15 m equivalent per 100 g solids in the aqueous dispersion.

6. Aqueous dispersions according to any one of claims 1 to 5, characterised in that maleic anhydride is used as a dicarboxylic acid derivative.

7. Aqueous dispersions according to any one of claims 1 to 6, characterised in that the compounds containing more than one epoxide group per molecule are selected from one or more of the groups comprising polyphenols condensed with epichlorohydrin, glycidyl esters of polycarboxylic acids, epoxidised aliphatic or cycloaliphatic multiply-unsaturated olefines and/or the glycidyl derivatives of nitrogen-containing heterocycles.

8. A method of preparing aqueous dispersions according to any one of claims 1 to 7, characterised in that components a), b) and c) are reacted in an organic solvent, preferably in an aromatic or cyclic or non-cyclic aliphatic saturated hydrocarbon or in an ether containing four to 15 carbon atoms, the solvent is removed before dispersion in water, and dispersion is then effected without additional emulsifier.

9. Use of the aqueous dispersions according to any one of claims 1 to 7 as film-formers in sizing media.

10. Use of the aqueous dispersions according to any one of claims 1 to 7 for the production of sized glass fibres.

11. Use of the aqueous dispersions according to any one of claims 1 to 7 for the production of plastics reinforced with sized glass fibres.

12. Use of the aqueous dispersions according to any one of claims 1 to 7 for the production of epoxy resins and unsaturated polyester resins reinforced with sized glass fibres.

**Revendications**

1. Dispersions aqueuses contenant un mélange de polyesters et de résines époxy modifiés par des unités polyéther et par des groupes époxy, caractérisées en ce que le mélange est un produit réactionnel

a) de polyéthers hydroxyfonctionnels hydrophiles, aliphatiques à longues chaînes contenant au moins 30% en poids, de préférence 40-80% en poids d'unités d'oxyde d'éthylène,

b) d'acides dicarboxyliques et/ou de dérivés d'acides dicarboxyliques aliphatiques, cycloaliphatiques ou aromatiques, et

c) de composés contenant plus d'un groupe époxy par molécule,

dans lesquelles la teneur résiduelle en oxygène du groupe époxy se situe entre 0,5 et 15% en poids, de préférence entre 0,5 et 10% en poids, de manière particulièrement préférée entre 1 et 8% en poids,

13

et dans lesquelles le mélange peut être mis en dispersion sans émulsifiant supplémentaire.

2. Dispersions aqueuses selon la revendication 1, caractérisées en ce que les polyéthers sont des polyéthers mono- ou dihydroxyfonctionnels ayant un poids moléculaire entre 370 et 5000, de préférence entre 1000 et 3000.

3. Dispersions aqueuses selon l'une quelconque des revendications 1 ou 2, caractérisées en ce que les acides dicarboxyliques aliphatiques, cycloaliphatiques ou aromatiques sont des acides contenant de 4 à 12 atomes de carbone et leurs dérivés.

4. Dispersions aqueuses selon l'une quelconque des revendications 1 à 3, caractérisées en ce que les acides dicarboxyliques et/ou les dérivés d'acides dicarboxyliques sont des acides dicarboxyliques et/ou des dérivés d'acides dicarboxyliques à insaturation éthylénique.

5. Dispersions aqueuses selon la revendication 4, caractérisées en ce que la teneur en groupes à insaturation éthylénique s'élève à au moins 0,15 milliéquivalent, rapportée à 100 g de substances solides dans la dispersion aqueuse.

6. Dispersions aqueuses selon l'une quelconque des revendications 1 à 5, caractérisées en ce que, comme dérivé acide dicarboxylique, on met en oeuvre l'anhydride maléique.

7. Dispersions aqueuses selon les revendications 1 à 6, caractérisées en ce que les composés contenant plus d'un groupe époxy par molécule sont sélectionnés parmi un ou plusieurs groupes contenant des polyphénols condensés avec de l'épichlorhydrine, des esters glycidyliques d'acides polycarboxyliques, des oléfines époxydées, aliphatiques ou cycloaliphatiques plusieurs fois insaturées, et/ou les dérivés glycidyliques de composés hétérocycliques azotés.

8. Procédé pour la préparation de dispersions aqueuses selon l'une quelconque des revendications 1 à 7, caractérisé en ce qu'on amène à réagir les composants a), b) et c) dans un solvant organique, de préférence dans un hydrocarbure aromatique ou aliphatique saturé cyclique ou acyclique, ou encore dans un éther contenant de 4 à 15 atomes de carbone, on élimine le solvant avant la mise en dispersion dans l'eau et ensuite, on effectue la mise en dispersion sans émulsifiant supplémentaire.

9. Utilisation des dispersions aqueuses selon l'une quelconque des revendications 1 à 7, comme agent filmogène dans des agents d'encollage.

10. Utilisation des dispersions aqueuses selon l'une quelconque des revendications 1 à 7, pour la préparation de fibres de verre encollées.

11. Utilisation des dispersions aqueuses selon l'une quelconque des revendications 1 à 7, pour la préparation de matières synthétiques renforcées avec des fibres de verre encollées.

12. Utilisation des dispersions aqueuses selon l'une quelconque des revendications 1 à 7, pour la préparation de résines époxy et de résines de polyester insaturées, renforcées avec des fibres de verre encollées.